# EUROPÄISCHE PATENTSCHRIFT

(11) **EP 3 003 687 B1**
(45) Veröffentlichungstag und Bekanntmachung des Hinweises auf die Patenterteilung: **20.02.2019**
(21) Anmeldenummer: 14725027.8
(22) Anmeldetag: 30.04.2014
(51) Int. Cl.: B29C 65/02, B29C 35/16, B65B 51/32, B31B 70/26

(54) **KÜHLVORRICHTUNG FÜR DIE KÜHLUNG EINER SCHWEISSNAHT AN EINER SEITENFALTE EINES FOLIENMATERIALS IN EINER SACKFÜLLANLAGE**
COOLING DEVICE FOR COOLING A WELD ON A SIDE FOLD OF A FILM MATERIAL IN A BAG FILLING SYSTEM
DISPOSITIF DE REFROIDISSEMENT SERVANT À REFROIDIR UN JOINT SOUDÉ AU NIVEAU D'UN PLI LATÉRAL D'UN MATÉRIAU EN FEUILLE DANS UNE INSTALLATION D'ENSACHAGE

(30) Priorität: 29.05.2013 DE 102013105549
(43) Veröffentlichungstag der Anmeldung: 13.04.2016
(73) Patentinhaber: Windmöller & Hölscher KG, 49525 Lengerich (DE)
(72) Erfinder: VOß, Hans-Ludwig, 49545 Tecklenburg (DE); HUIL, Oliver, 48477 Hörstel (DE); UDALLY, Ralf, 48145 Münster (DE)
(86) Internationale Anmeldenummer: PCT/EP2014/058902
(87) Internationale Veröffentlichungsnummer: WO 2014/191151

(56) Entgegenhaltungen:
- EP-A1- 0 729 886
- DE-A1- 3 937 772
- DE-A1- 19 603 371
- DE-U1- 29 624 455

## Beschreibung

Die vorliegende Erfindung betrifft eine Kühlvorrichtung für die Kühlung einer Schweißnaht an einer Seitenfalte eines Folienmaterials in einer Sackfüllanlage sowie eine Sackfüllanlage mit einer solchen Kühlvorrichtung.

Grundsätzlich ist es bekannt, dass Sackfüllanlagen zum Befüllen von Säcken mit Schüttgut verwendet werden. Hierfür werden Schweißvorrichtungen für das Versiegeln der Säcke verwendet. Insbesondere werden diese Schweißvorrichtungen verwendet, um eine Bodennaht und eine Kopfnaht zum Verschließen des Sacks zur Verfügung zu stellen. Um darüber hinaus jedoch eine verbesserte Handhabbarkeit gewährleisten zu können, sind auch Schweißnähte für das Zurverfügungstellen von sogenannten Eckschweißnähten bekannt. Eine solche Schweißnaht ist nur seitlich an einem Folienmaterial in Form eines Folienschlauchs angeordnet. Sie dient dazu, beim fertigen Sack die einzelnen Ecken gegen das Eindringen von Schüttgutmaterial zu verschließen. Gleichzeitig wird dort sozusagen ein schlaufenartiger Vorsprung gebildet, um den gefüllten Sack besser bewegen zu können. Bei bekannten Sackfüllanlagen ist nach der Schweißvorrichtung eine Kühlvorrichtung vorgesehen, um eine solche Schweißnaht an der Seitenfalte des Sackabschnitts zu kühlen. Hierfür sind bei bekannten Kühlvorrichtungen Kühlkanäle vorgesehen, die Austrittsflächen mit Austrittsöffnungen aufweisen, weiche spitzwinklig zueinander angeordnet sind. Durch die spitzwinklige Anordenbarkeit kann ein solcher Kühlkanal zumindest teilweise in die Seitenfalte eindringen und im Bereich der Schweißnaht einen Austritt von Kühlfluid ermöglichen.

Nachteilhaft bei bekannten Kühlvorrichtungen ist es, dass das austretende Kühlfluid im Wesentlichen frei auf das Material der Seitenfalte des Folienmaterials treffen kann. So erfolgt insbesondere eine im Wesentlichen senkrechte Austrittsrichtung für die Strömung des Kühlfluids bezogen auf das benachbarte Material der Seitenfalte des Folienmaterials. Mit anderen Worten trifft das austretende Kühlmaterial direkt, insbesondere senkrecht, auf das Material der Seitenfalte und wirkt dementsprechend mechanisch verformend bzw. verwerfend auf das Material der Seitenfalte ein. Auch entsteht an dieser Stelle ein Überdruck, sodass das Material der Seitenfalte, bezogen aus das Innere des Sackabschnitts des Folienmaterials, nach innen gedrückt wird. Diese mechanische Einwirkung kann zu mechanischer Beeinflussung des Folienmaterials durch unerwünschtes Strecken führen. Auch bringt eine solche Krafteinwirkung möglicherweise Faltenwurf mit sich, sodass für den nachfolgenden Betrieb, insbesondere die Förderung innerhalb der Sackfüllanlage, Nachteile bestehen. Diese Nachteile können so weitreichend sein, dass ein entsprechender Sackabschnitt mit einem solchen Faltenwurf als Ausschuss zu handhaben ist. Nicht zuletzt wird auf diese Weise durch die vergrößerte Beabstandung zwischen dem Kühlkanal und den benachbarten Flächen der Seitenfalte eine reduzierte Kühlleistung erreicht, sodass die entsprechende Kühltaktzeit erhöht wird und die Maschinengeschwindigkeit reduziert werden muss.

Aus der EP 0 729 886 A1, der DE 196 03 371 A1 sowie der DE 296 24 455 U1 sind z.B. Schlauchbeutelmaschinen zur Herstellung von verschweißten Schlauchbeuteln bekannt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise Faltenwurf zu vermeiden und insbesondere die Qualität der Folienbahn mit einer Schweißung zu steigern.

Voranstehende Aufgabe wird gelöst durch eine Kühlvorrichtung mit den Merkmalen des Anspruchs 1 und eine Sackfüllanlage mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Kühlvorrichtung beschrieben sind, selbstverständlich auch im Zusammenhang mit der erfindungsgemäßen Sackfüllanlage und jeweils umgekehrt, sodass bezüglich der Offenbarung zu den einzelnen Erfindungsaspekten stets wechselseitig Bezug genommen wird bzw. werden kann.

Eine erfindungsgemäße Kühlvorrichtung dient der Kühlung einer Schweißnaht an einer Seitenfalte eines Folienmaterials in einer Sackfüllanlage. Hierfür weist die Kühlvorrichtung einen Kühlkanal für die Zufuhr von Kühlfluid auf. Der Kühlkanal ist mit einem Kühlabschnitt versehen, welcher zwei spitzwinklig zueinander ausgerichtete Austrittsflächen aufweist, in welchen Austrittsöffnungen für den Austritts des Kühlfluids aus dem Kühlkanal ausgebildet sind. Erfindungsgemäß zeichnet sich die Kühlvorrichtung dadurch aus, dass der Kühlabschnitt zumindest ein Leitelement für das Leiten des Kühlfluids aufweist. Dabei richtet das zumindest eine Leitelement die Strömungsrichtung des aus den Austrittsöffnungen ausgetretenen Kühlfluids spitzwinklig zu der jeweiligen Austrittsfläche aus.

Eine erfindungsgemäße Kühlvorrichtung bildet also einen entscheidenden Unterschied hinsichtlich der Strömungsrichtung für das Kühlfluid im Vergleich zu bekannten Kühlvorrichtungen aus. Dadurch wird ein senkrechter Austritt des Kühlfluids vermieden, sodass auch ein senkrechtes Auftreffen auf die im Üblichen parallel zu den Austrittsflächen angeordneten Seitenflächen der Seitenfalte vermieden wird. Im Gegensatz zu einem senkrechten Auftreffen etwa auf das Material der Seitenfalte wird durch die erfindungsgemäße Ausgestaltung der Kühlvorrichtung ein spitzwinkliges Auftreffen auf das Material der Seitenfalte gewährleistet. Bevorzugt ist sogar ein im Wesentlichen paralleles Austreten des Kühlfluids parallel zur Materialfläche der Seitenfalte des Folienmaterials möglich. Dadurch wird die mechanische Einwirkung, wie sie in der Einleitung dieser Anmeldung beschrieben worden ist, auf das Folienmaterial deutlich reduziert. Insbesondere werden das Ausbilden eines Überdrucks und das Erzeugen eines Faltenwurfs mit geringerer Wahrscheinlichkeit oder überhaupt nicht mehr auftreten.

Die Leitelemente können dabei in erfindungsgemäßer Weise unterschiedlichst ausgebildet sein. So kann ein gemeinsames Leitelement für eine Vielzahl von Austrittsöffnungen vorgesehen sein. Auch ist es möglich, dass jede Austrittsöffnung ein eigenes Leitelement aufweist. Weiter ist es möglich, dass das Leitelement im Wesentlichen integral mit dem Kühlabschnitt ausgebildet ist, sodass sozusagen Leitschaufeln für einzelne Austrittsöffnungen im Bereich des Austritts angeordnet sein können. Selbstverständlich sind auch unterschiedliche Leitelemente für jeweils zwei oder mehr Austrittsöffnungen gemeinsam denkbar.

Eine erfindungsgemäße Kühlvorrichtung wird insbesondere bei einer Sackfüllanlage nach dem sogenannten FFS-Verfahren (Form-Fill-Seal) eingesetzt. Das bedeutet, dass insbesondere bei einer Schweißnaht für eine Bodenschweißnaht, eine Kopfschweißnaht, bevorzugt jedoch eine Eckschweißnaht eines Sacks in einer Sackfüllanlage, die Kühlvorrichtung Verwendung findet. Bei der Schweißnaht in Form einer Eckschweißnaht für eine erfindungsgemäße Kühlvorrichtung handelt es sich um eine Schweißnaht, welche nicht komplett quer über die Breite des Folienmaterials eingebracht wird. Vielmehr verbleibt diese Schweißnaht in der Seitenfalte des Folienmaterials und verbindet aufeinanderliegende Oberflächen dieser Seitenfalte miteinander. Die Seitenfalte eines Folienmaterials ist dabei eine insbesondere nach innen geklappte Seitenfalte, sodass beim Zusammenlegen dieser Seitenfalte insgesamt vier Materialschichten des Folienmaterials übereinander liegen. Im Querschnitt bildet sich dementsprechend eine Form bzw. eine Kontur aus, welche im Wesentlichen dem mathematischen Summenzeichen entspricht (bzw. einem nach links oder nach rechts gedrehten großen M).

Eine erfindungsgemäße Kühlvorrichtung kann weiter in die Seitenfalte eingeschoben werden, da durch die spitzwinklige Anordnung der einzelnen Austrittsflächen zueinander sozusagen ein Keil entsteht, welcher in öffnender Wirkung in die Seitenfalte eingebracht werden kann.

Unter einem Folienmaterial ist im Sinne der vorliegenden Erfindung insbesondere eine Folienbahn zu verstehen, welche durch eine Sackfüllanlage hindurch gefördert wird. Die Folienbahn ist dabei vorzugsweise als Folienschlauch mit gefalteten Seitenfalten auf beiden Seiten entlang der Breite der Folienbahn ausgebildet.

Durch das spitzwinklige Austreten und damit die Vermeidung eines senkrechten Auftreffens der Strömung des Kühlfluids auf das Material der Seitenfalte des Folienmaterials wird darüber hinaus ein zusätzlicher positiver Effekt erzielt. So wird durch die Strömungsrichtung nun eine Strömung des Kühlfluids entlang der Seitenfalte erzeugt. Damit wird eine Geschwindigkeitsdifferenz bzw. eine Druckdifferenz hergestellt, sodass insbesondere eine Sogwirkung auf das Material der Seitenfalte auf die Austrittsflächen hin erzielt wird. So wird nicht nur der negative Effekt bekannter Kühlvorrichtungen vermieden, sondern darüber hinaus ein sichernder Effekt einer Zugkraft auf die benachbarte Fläche der Seitenfalte bewirkt. Mit anderen Worten wird während der Kühlung die Seitenfalte sozusagen in Richtung der Austrittsflächen angesaugt und stabil gehalten, sodass durch diese Zugkrafteinwirkung unerwünschter Faltenwurf noch sicherer vermieden wird.

Nicht zuletzt wird durch eine erfindungsgemäße Strömungsrichtung auch die Kühlwirkung verbessert, da insbesondere laminare Strömungen mit geringen Wirbelbildungen im Inneren des Bereichs zwischen den Austrittsflächen und dem Material der Seitenfalte erreicht werden können.

Als Kühlfluid können sowohl gasförmige, als auch flüssige Fluide einsetzbar sein. Insbesondere wird jedoch kühle Luft aus der Umgebung verwendet. Eine Kühlung erfolgt vorzugsweise in Temperaturbereichen von ca. 250°C und mehr auf weniger als ca. 100°C. Eine verbesserte Kühlung, wie sie durch die erfindungsgemäße Kühlvorrichtung zur Verfügung gestellt wird, dient neben der Erhöhung der Qualität der Durchführung des Prozesses in der Sackfüllanlage auch zu einer Beschleunigung der Taktsituation, sodass die gesamte Sackfüllanlage mit höherer Füllgeschwindigkeit betrieben werden kann.

Es kann von Vorteil sein, wenn bei einer erfindungsgemäßen Kühlvorrichtung der Austrittswinkel zwischen der Strömungsrichtung des aus den Austrittsöffnungen ausgetretenen Kühlfluids und den Austrittsflächen kleiner oder gleich ca. 45° beträgt. Je kleiner der Austrittswinkel ist, umso mehr nähert sich die Strömungsrichtung einer parallelen Richtung zu den Austrittsflächen und damit auch zu den seitlich anliegenden Flächen der Seitenfalte an. Der beschriebene Effekt hinsichtlich einer Sogwirkung und gleichzeitig die Reduktion der Wahrscheinlichkeit von Faltenwurf werden durch die Reduktion des Austrittswinkels weiter reduziert. Insbesondere werden Austrittswinkel eingesetzt, welche sogar im Bereich von unter ca. 30° liegen. Besonders bevorzugt sind Bereiche für die Austrittswinkel von weniger als ca. 10°. Dabei ist besonders bevorzugt eine parallele oder im Wesentlichen parallele Ausrichtung der Strömungsrichtung zu den Austrittsflächen. Die beschriebenen Vorteile der Sogwirkung und der Reduktion des Faltenwurfs gehen im Wesentlichen gemeinschaftlich einher mit der Reduktion des Austrittswinkels. Je kleiner der Austrittswinkel ausgebildet ist, umso mehr treten die beschriebenen erfindungsgemäßen Vorteile zutage.

Vorteilhaft ist es weiter, wenn bei einer erfindungsgemäßen Kühlvorrichtung die Strömungsrichtung des aus den Austrittsöffnungen ausgetretenen Kühlfluids entlang der Austrittsflächen, insbesondere parallel oder im Wesentlichen parallel zu den Austrittsflächen, ausgerichtet ist. Dabei handelt es sich sozusagen im Wesentlichen um die optimale oder ideale Ausrichtung der Strömungsrichtung. Die beschriebenen Vorteile der Sogwirkung und der Vermeidung des Faltenwurfs werden auf diese Weise am besten erzielt. Dabei kann ein mehrteiliges Umlenken erfolgen, sodass der Austritt z. B. noch im Wesentlichen senkrecht für das Kühlfluid aus den Austrittsöffnungen erfolgt. Anschließend tritt das Leitelement in Funktion und lenkt die Strömungsrichtung des ausgetretenen Kühlfluids in erfindungsgemäßer Weise schrittweise oder vollständig in einem Schritt um.

Weiter ist es von Vorteil, wenn bei einer erfindungsgemäßen Kühlvorrichtung die Austrittsöffnungen im Scheitelbereich der Austrittsflächen, insbesondere genau im Scheitel der Austrittsflächen, angeordnet sind. Der Scheitelbereich wird definiert durch die spitzwinklige Anordnung der Austrittsflächen zueinander. Bilden die beiden Austrittsflächen Schenkel zueinander, so wird der Kontakt zwischen den beiden Austrittsflächen der geringste Abstand sein. Dieser Scheitelbereich kann direkt der Scheitel des entsprechenden Winkels zwischen den beiden Austrittsflächen sein. Handelt es sich um ein senkrechtes Abschlussblech, also einen stumpfen Scheitelbereich, so ist dieser vom realen mathematischen bzw. geometrischen Scheitel entfernt, jedoch als Scheitelbereich zwischen den Austrittsflächen weiter definierbar. Der Scheitelbereich bzw. der Scheitel der Austrittsflächen ist also derjenige Abschnitt der Kühlvorrichtung, welcher am weitesten in die Seitenfalte hineinragt. Die Anordnung der Austrittsöffnungen genau in diesem Scheitelbereich bzw. genau am Scheitel bringt das Kühlfluid am tiefsten in die Seitenfalte ein, sodass die Strecke nach dem Austritt aus den Austrittsöffnungen entlang des Materials der Seitenfalte ideal bzw. maximal verlängert ist. Das möglichst tiefe Eindringen des Kühlfluids erzeugt die beschriebene Sogwirkung am tiefsten in der Seitenfalte, sodass die Vorteile der Sogwirkung und damit die Reduktion des Faltenwurfs noch weiter verbessert werden können. Auch wird sichergestellt, dass eine möglichst intensive Kühlung bzw. Kühlwirkung des eingebrachten Kühlfluids auf möglichst großflächige Bereiche des Materials der Seitenfalte zur Verfügung gestellt werden kann.

Ein weiterer Vorteil wird erzielt, wenn bei einer erfindungsgemäßen Kühlvorrichtung das wenigstens eine Leitelement austauschbar an dem Kühlkanal befestigt ist. So ist es möglich, eine Kontur des Leitelements an unterschiedliche Konturen von Seitenfalten des Folienmaterials anzupassen. Auch ist es möglich, dass bestehende Kühlkanäle bei bestehenden Kühlvorrichtungen mit erfindungsgemäßen Leitelementen nachgerüstet werden können. Da das Leitelement auf seiner Außenfläche in intensivem Kontakt mit dem Folienmaterial, also der Seitenfalte, steht, wird hier auch durch eine Gleitwirkung auf der Außenseite des Leitelements der größte Verschleiß stattfinden. Durch eine austauschbare Befestigung kann das Leitelement als Verschleißteil ausgebildet sein, sodass nach Abrieb auf der Außenfläche, z. B. einer gleitreduzierenden Schicht, beispielsweise aus Teflon, durch den Austausch eine Reduktion der Verschleißsituation erreicht wird.

Ebenfalls von Vorteil ist es, wenn bei einer erfindungsgemäßen Kühlvorrichtung die Austrittsöffnungen einen freien Öffnungsquerschnitt aufweisen, welcher eine Beschleunigung der Strömung des Kühlfluids erzeugt. In Summe bilden also alle Austrittsöffnungen eine Reduktion des freien Querschnitts im Vergleich zur Strömungssituation innerhalb des Kühlkanals. Durch die Beschleunigung der Strömung des Kühlfluids wird gleichzeitig auch ein Druckunterschied erzeugt, sodass komprimiertes Kühlfluid reduziert wird hinsichtlich des Drucks beim Durchtreten durch die Austrittsöffnung. Diese Reduktion des Drucks wird insbesondere bei gasförmigen Kühlfluiden eingesetzt. Damit wird nach dem Gesetz der idealen Gasgleichung eine Reduktion der Temperatur des Kühlfluids beim Austritt aus den Austrittsöffnungen erzielt. Die Reduktion der Temperatur erzielt einen zusätzlichen Kühleffekt, welcher zur Kühlung der Schweißnaht Wirkung findet. Dementsprechend wird durch diese Ausführungsform die Kühlwirkung weiter verbessert und eine weitere Reduktion der Taktzeit der Kühlung möglich.

Ebenfalls von Vorteil kann es sein, wenn bei einer erfindungsgemäßen Kühlvorrichtung die Länge des wenigstens einen Leitelements in Transportrichtung des Folienmaterials kleiner oder gleich der Länge der Schweißnaht in Transportrichtung des Folienmaterials ist. Die Transportrichtung ist dabei die Förderrichtung des Folienmaterials durch die Sackfüllanlage. Wird von einer Schweißvorrichtung taktweise ein entsprechender Sackabschnitt der Folienbahn weiterbefördert und gelangt zur Kühlvorrichtung, so muss diese Kühlvorrichtung im Wesentlichen ausschließlich zur Kühlung der Schweißnaht eingesetzt werden. Hinsichtlich ihrer Länge entlang der Transportrichtung des Folienmaterials reicht dementsprechend eine Erstreckung kleiner oder gleich der Länge der Schweißnaht aus. Auch Erstreckungen von weniger als der Länge der Schweißnaht sind vorteilhaft, da auch ein seitlicher Austritt winklig, insbesondere spitzwinklig, zur Transportrichtung des Folienmaterials für das Kühlfluid aus den Austrittsöffnungen möglich ist. Durch eine solche Ausführungsform wird das Baumaß und damit die Komplexität einer erfindungsgemäßen Kühlvorrichtung weiter reduziert.

Ein weiterer Vorteil wird erzielt, wenn bei einer erfindungsgemäßen Kühlvorrichtung die Strömungsrichtung des aus den Austrittsöffnungen ausgetretenen Kühlfluids quer oder im Wesentlichen quer zur Transportrichtung des Folienmaterials ausgerichtet ist. Die Ausrichtung quer oder im Wesentlichen quer zur Transportrichtung erzeugt in idealer bzw. in verbesserter Weise die beschriebene Sogwirkung und damit die Reduktion der Gefahr von Faltenwurf. Insbesondere ist die Strömungsrichtung senkrecht oder im Wesentlichen senkrecht zur Transportrichtung ausgebildet.

Ein weiterer Gegenstand der vorliegenden Erfindung ist eine Sackfüllanlage für die Befüllung von Säcken mit Schüttgut, aufweisend eine Siegelstation für das Erzeugen zumindest einer Schweißnaht in einer Seitenfalte eines Folienmaterials, insbesondere in Form einer Folienbahn. Weiter weist die Sackfüllanlage eine Kühlvorrichtung für das Kühlen der erzeugten Schweißnaht auf. Eine erfindungsgemäße Sackfüllanlage zeichnet sich dadurch aus, dass die Kühlvorrichtung in erfindungsgemäßer Weise ausgebildet ist. Damit bringt eine erfindungsgemäße Sackfüllanlage die gleichen Vorteile mit sich, wie sie ausführlich mit Bezug auf eine erfindungsgemäße Kühlvorrichtung erläutert worden sind. Bei der Schweißnaht handelt es sich, wie bereits zur Kühlvorrichtung erläutert worden ist, insbesondere um eine Eckschweißnaht, welche nicht durch die gesamte Breite des Folienmaterials eine Erstreckung findet. Vielmehr dient die Eckschweißnaht dazu, die späteren Ecken eines Sackes gegen das Eindringen von Schüttgut abzuschließen. Damit wird gleichzeitig eine Handhabe ausgebildet, welches das Transportieren bzw. Greifen der gefüllten Säcke mit den Händen erleichtert.

Eine Sackfüllanlage gemäß dem voranstehenden Absatz kann dahingehend weitergebildet werden, dass die Kühlvorrichtung, insbesondere der Kühlkanal, entlang oder im Wesentlichen entlang der Transportrichtung des Folienmaterials ausgerichtet ist. Das bedeutet, dass sozusagen in Förderrichtung innerhalb der Sackfüllanlage auch die Kühlvorrichtung ausgebildet sein kann. Der keilförmige Abschnitt des Kühlkanals dringt dabei in die Seitenfalte ein, sodass eine zusätzliche Führungsfunktion durch die Kühlvorrichtung gegeben wird. Die Ausrichtung entlang der Transportrichtung bietet darüber hinaus den geringsten Einfluss auf die Förderung nach der Durchführung der Kühlung, sodass die Einwirkung bzw. negative Einflussnahme auf den Transport innerhalb der Sackfüllanlage im Wesentlichen vollständig vermieden werden kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Sackfüllanlage,
- Fig. 2: eine schematische Querschnittsdarstellung einer Siegelstation,
- Fig. 3: eine erste Ausführungsform einer erfindungsgemäßen Kühlvorrichtung,
- Fig. 4: eine weitere Ausführungsform einer erfindungsgemäßen Kühlvorrichtung und
- Fig. 5: eine weitere Ausführungsform einer erfindungsgemäßen Kühlvorrichtung.

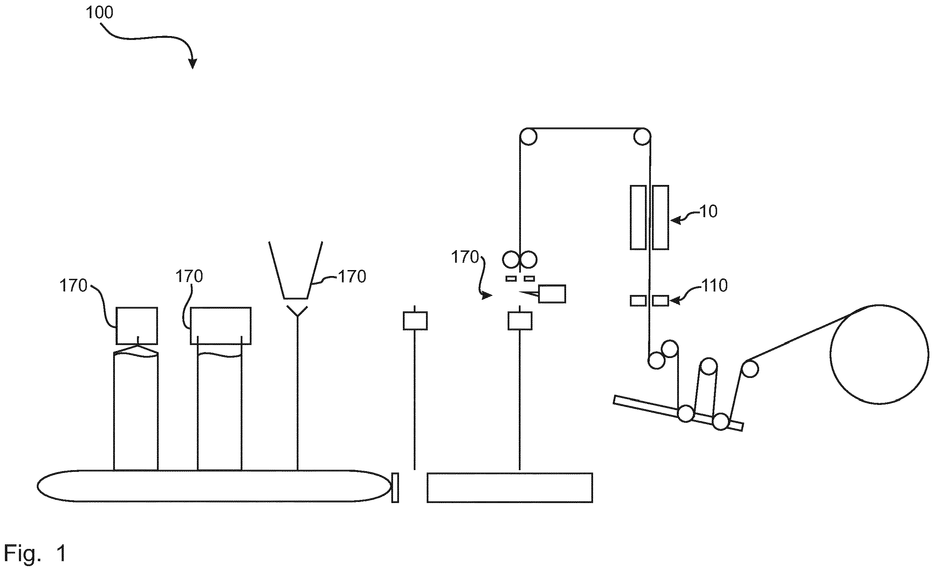

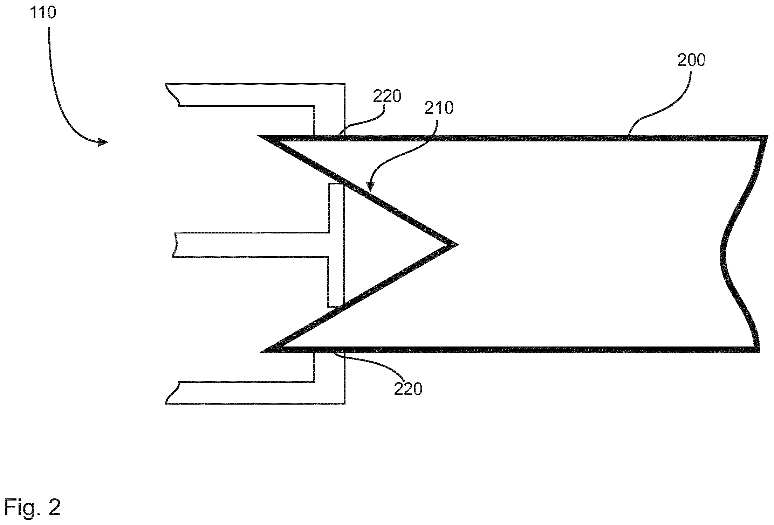

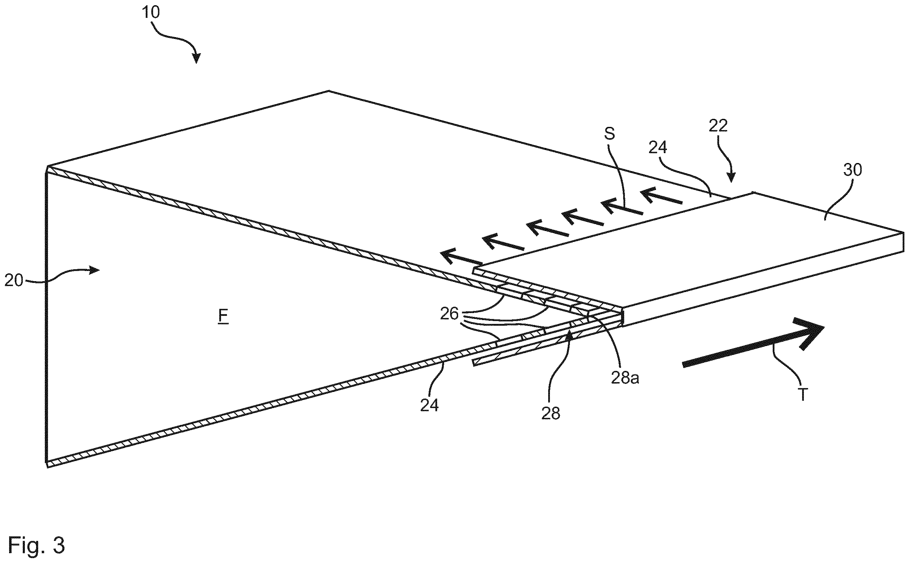

In Fig. 1 ist schematisch eine Sackfüllanlage 100 gemäß der vorliegenden Erfindung dargestellt. Von rechts ausgehend wird durch eine Vorlage von einer Vorlagerolle eine Folienbahn als Folienmaterial 200 kontinuierlich abzogen. Über eine als Tänzervorrichtung ausgebildete Puffervorrichtung erfolgt eine Umwandlung der kontinuierlichen Abwicklung in einen taktweisen Vorschub des Folienmaterials 200. Anschließend ist die Siegelstation 110 zu erkennen, wie sie in der Lage ist, eine Eckschweißnaht zu erzeugen. Eine solche Siegelstation 110 ist detaillierter in Fig. 2 dargestellt und wird später noch erläutert. Anschließend an die Siegelstation 110 wird in Transportrichtung T eine Kühlvorrichtung 10 vorgesehen, wie sie z. B. die Fig. 3 bis 5 zeigen. Anschließend wird ein Weiterführen des Folienmaterials 200durchgeführt, sodass eine Vielzahl von Stationen 170 erreichbar wird. Diese bedienen insbesondere ein Ablängen von einzelnen Sackabschnitten, ein Abfüllen von Schüttgut sowie ein Verschließen mit einer Kopfnaht und ein Kühlen dieser Kopfnaht.

Bei der Ausführungsform der Sackfüllanlage 100 gemäß der Fig. 1 handelt es sich in Summe also vorzugsweise um eine sogenannte Form-Fill-Seal-Maschine.

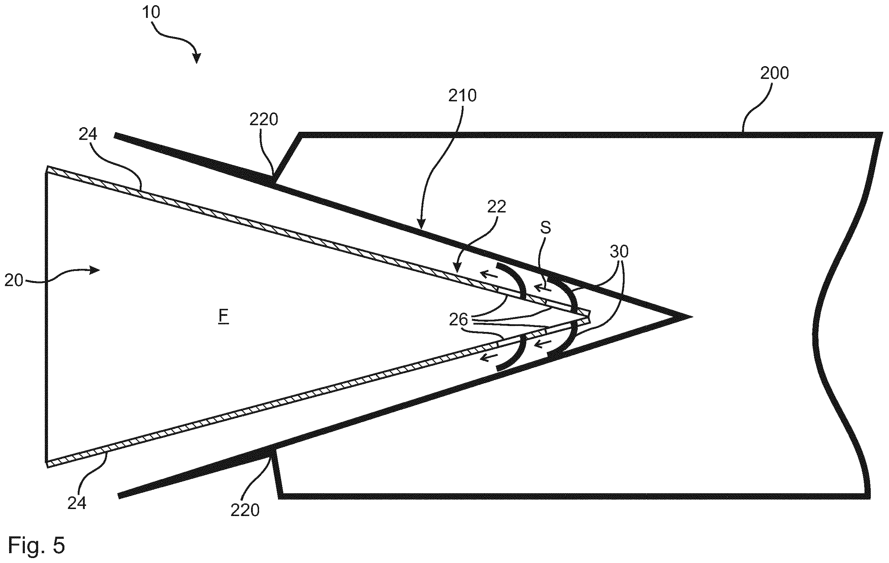

In Fig. 2 ist schematisch eine Siegelstation 110 dargestellt. Diese ist im Querschnitt dargestellt, sodass sich die Transportrichtung dieser Darstellung im Wesentlichen senkrecht zur Zeichnungsebene erstreckt. Hier ist gut zu erkennen, dass im leicht aufgeblasenen Folienmaterial 200 sich eine Seitenfalte 210 ausbildet, die eine Form eines zur Seite gelegten großen M aufweist. Damit bildet sich eine Seitenfalte 210 aus, in welcher Siegelbacken von außen und von innen eingreifen können. Hier wird sichergestellt, dass die Seitenfalte 210 zwei nach außen weisende Seitenfalze aufweist, welche miteinander versiegelt werden. Die Seitenfalte 210 selbst bleibt nach innen geöffnet, sodass später ein Auffalten des gesamten Sackes beim Befüllen mit Schüttgut ermöglicht wird. Beispielsweise zeigt die Fig. 5 eine solche Situation mit fertiggestellter Schweißnaht 220.

In Fig. 3 ist schematisch eine erste Ausführungsform einer erfindungsgemäßen Kühlvorrichtung 10 dargestellt. Ein Kühlkanal 20 wird ausgebildet und nach außen abgeschlossen durch zwei Austrittsflächen 24, welche spitzwinklig zueinander ausgebildet sind. Im Kühlabschnitt 22 des Kühlkanals 20 sind Austrittsöffnungen 26 angeordnet, durch welche das Kühlfluid F austreten kann. Um zu vermeiden, dass das Kühlfluid F eine Strömungsrichtung senkrecht auf die benachbarte Seitenfalte 210 aufweist, ist hier ein abgekantetes Blech als Leitelement 30 vorgesehen, welches eine Umlenkung der Strömungsrichtung S im Wesentlichen entlang oder sogar parallel zu den Austrittsflächen 24 ermöglicht. Hier ist auch gut eine Korrelation zur Transportrichtung T zu erkennen, sodass die Ausrichtung der Strömungsrichtung S auch quer bzw. sogar senkrecht zur Transportrichtung T erfolgt.

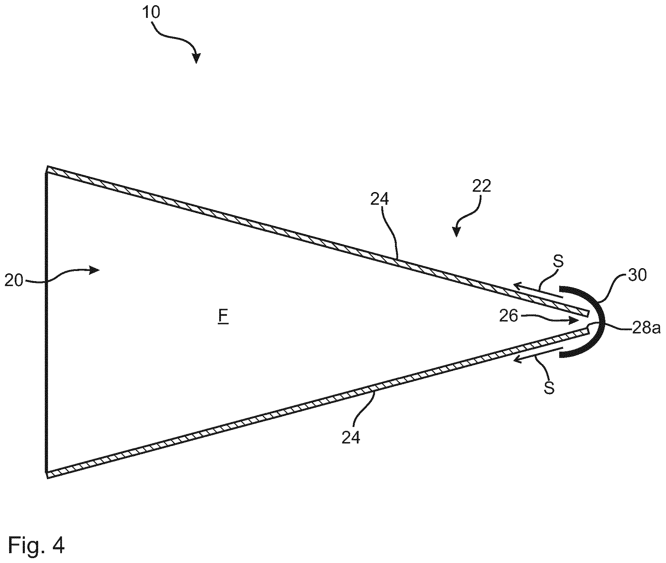

Fig. 4 zeigt eine Variante, bei welcher die Austrittsöffnungen 26 direkt im Scheitelbereich 28, bevorzugt im Scheitel 28a zwischen den Austrittsflächen 24 angeordnet sind. Damit kann die geometrische Erstreckung des Leitelements 30 deutlich reduziert werden im Vergleich zur Ausführungsform der Fig. 3. Auch erfolgt die Einbringung des Kühlfluids F an der tiefsten Stelle innerhalb der Seitenfalte 210, sodass die Kühlwirkung vorzugsweise ideal erreicht wird.

Fig. 5 zeigt eine weitere Ausführungsform einer erfindungsgemäßen Kühlvorrichtung 10, welche hier in Korrelation mit dem Folienmaterial 200 dargestellt ist. Hier ist gut zu erkennen, dass sich die Flächen der Seitenfalte 210 im Wesentlichen parallel entlang der Austrittsflächen 24 anordnen. Die Strömungsrichtung S, welche spitzwinklig, vorzugsweise parallel, zu den Austrittsflächen 24 ausgerichtet ist, weist dementsprechend eine ähnliche oder sogar gleiche Ausrichtung auch zu den Flächen der Seitenfalte 210 auf. Bei der Ausführungsform der Fig. 5 ist eine Vielzahl von Leitelementen 30 für jede Austrittsöffnung 26 einzeln vorgesehen. Dementsprechend wird eine noch gezieltere Beeinflussung der Strömungsrichtung S beim Austritt des Kühlfluids F möglich.

Die voranstehende Erläuterung der Ausführungsformen beschreibt die vorliegende Erfindung ausschließlich im Rahmen von Beispielen.

### Bezugszeichenliste

- 10: Kühlvorrichtung
- 20: Kühlkanal
- 22: Kühlabschnitt
- 24: Austrittsfläche
- 26: Austrittsöffnung
- 28: Scheitelbereich
- 28a: Scheitel
- 30: Leitelement

- 100: Sackfüllanlage
- 110: Siegelstation
- 170: Station

- 200: Folienmaterial
- 210: Seitenfalte
- 220: Schweißnaht

- F: Kühlfluid
- T: Transportrichtung
- S: Strömungsrichtung

## Patentansprüche

1. Kühlvorrichtung (10) für die Kühlung einer Schweißnaht (220) an einer Seitenfalte (210) eines Folienmaterials (200) in einer Sackfüllanlage (100), aufweisend einen Kühlkanal (20) für die Zufuhr von Kühlfluid (F), wobei der Kühlkanal (20) einen Kühlabschnitt (22) mit zwei spitzwinklig zueinander ausgerichteten Austrittsflächen (24) aufweist, in welchen Austrittsöffnungen (26) für den Austritt des Kühlfluids (F) aus dem Kühlkanal (20) ausgebildet sind, **dadurch gekennzeichnet, dass** der Kühlabschnitt (22) zumindest ein Leitelement (30) für das Leiten des Kühlfluids (F) aufweist, wobei das zumindest eine Leitelement (30) die Strömungsrichtung (S) des aus den Austrittsöffnungen (26) ausgetretenen Kühlfluids (F) spitzwinklig zu der jeweiligen Austrittsfläche (24) ausrichtet.

2. Kühlvorrichtung (10) nach Anspruch 1, **dadurch gekennzeichnet, dass** der Austrittswinkel zwischen der Strömungsrichtung (S) des aus den Austrittsöffnungen (26) ausgetretenen Kühlfluids (F) und den Austrittsflächen (24) kleiner oder gleich ca. 45° beträgt.

3. Kühlvorrichtung (10) nach einem der vorangegangenen Ansprüche, **dadurch gekennzeichnet, dass** die Strömungsrichtung (S) des aus den Austrittsöffnungen (26) ausgetretenen Kühlfluids (F) entlang der Austrittsflächen (24), insbesondere parallel oder im Wesentlichen parallel zu den Austrittsflächen (24), ausgerichtet ist.

4. Kühlvorrichtung (10) nach einem der vorangegangenen Ansprüche, **dadurch gekennzeichnet, dass** die Austrittsöffnungen (26) im Scheitelbereich (28) der Austrittsflächen (24), insbesondere genau am Scheitel (28a) der Austrittsflächen (24), angeordnet sind.

5. Kühlvorrichtung (10) nach einem der vorangegangenen Ansprüche, **dadurch gekennzeichnet, dass** das wenigstens eine Leitelement (30) austauschbar an dem Kühlkanal (20) befestigt ist.

6. Kühlvorrichtung (10) nach einem der vorangegangenen Ansprüche, **dadurch gekennzeichnet, dass** die Austrittsöffnungen (26) einen freien Öffnungsquerschnitt aufweisen, welcher eine Beschleunigung der Strömung des Kühlfluids (F) erzeugt.

7. Kühlvorrichtung (10) nach einem der vorangegangenen Ansprüche, **dadurch gekennzeichnet, dass** die Länge des wenigstens einen Leitelements (30) in Transportrichtung (T) des Folienmaterials (200) kleiner oder gleich der Länge der Schweißnaht (220) in Transportrichtung (T) des Folienmaterials (200) ist.

8. Kühlvorrichtung (10) nach einem der vorangegangenen Ansprüche, **dadurch gekennzeichnet, dass** die Strömungsrichtung (S) des aus den Austrittsöffnungen (24) ausgetretenen Kühlfluids (F) quer oder im Wesentlichen quer zur Transportrichtung (T) des Folienmaterials (200) ausgerichtet ist.

9. Sackfüllanlage (100) für die Befüllung von Säcken mit einem Schüttgut, aufweisend eine Siegelstation (110) für das Erzeugen zumindest einer Schweißnaht (220) in einer Seitenfalte (210) eines Folienmaterials (200), insbesondere in Form einer Folienbahn, weiter aufweisend eine Kühlvorrichtung (10) für das Kühlen der erzeugten Schweißnaht (220), **dadurch gekennzeichnet, dass** die Kühlvorrichtung (10) die Merkmale eines der Ansprüche 1 bis 8 aufweist.

10. Sackfüllanlage (100) nach Anspruch 9, **dadurch gekennzeichnet, dass** die Kühlvorrichtung (10), insbesondere der Kühlkanal (20) entlang oder im Wesentlichen entlang der Transportrichtung (T) des Folienmaterials (200) ausgerichtet ist.

## Claims

1. A cooling device (10) for cooling a weld (220) on a side fold (210) of a film material (200) in a bag filling system (100), having a cooling channel (20) for feeding cooling fluid (F), wherein the cooling channel (20) has a cooling segment (22) having two outlet surfaces (24) oriented at an acute angle to each other, in which outlet openings (26) for the discharging of the cooling fluid (F) from the cooling channel (20) are formed, **characterized in that** the cooling segment (22) has at least one guiding element (30) for guiding the cooling fluid (F), wherein the at least one guiding element (30) orients the flow direction (S) of the cooling fluid (F) discharged from the outlet openings (26) at an acute angle to the respective outlet surface (24).

2. A cooling device (10) according to Claim 1, **characterized in that** the outlet angle between the flow direction (S) of the cooling fluid (F) discharged from the outlet openings (26) and the outlet surfaces (24) is smaller or equal to approx. 45°.

3. A cooling device (10) according to any one of the preceding claims, **characterized in that** the flow direction (S) of the cooling fluid (F) discharged from the outlet openings (26) is oriented along the outlet surfaces (24), in particular parallel or substantially parallel to the outlet surfaces (24).

4. A cooling device (10) according to any one of the preceding claims, **characterized in that** the outlet openings (26) are arranged in the apex region (28) of the outlet surfaces (24), in particular right on the apex (28a) of the outlet surfaces (24).

5. A cooling device (10) according to any one of the preceding claims, **characterized in that** the at least one guiding element (30) is fastened replaceably on the cooling channel (20).

6. A cooling device (10) according to any one of the preceding claims, **characterized in that** the outlet openings (26) have a free opening cross section, which generates an acceleration of the flow of the cooling fluid (F).

7. A cooling device (10) according to any one of the preceding claims, **characterized in that** the length of the at least one guiding element (30) in the transport direction (T) of the film material (200) is smaller than or equal to the length of the weld (220) in the transport direction (T) of the film material (200).

8. A cooling device (10) according to any one of the preceding claims, **characterized in that** the flow direction (S) of the cooling fluid (F) discharged from the outlet openings (24) is oriented transversely or substantially transversely to the transport direction (T) of the film material (200).

9. A bag filling system (100) for the filling of bags with a bulk material, having a welding station (110) for generating at least one weld (220) in a side fold (210) of the film material (200), in particular in the form of a film web, further having a cooling device (10) for the cooling of the generated weld (220), **characterized in that** the cooling device (10) has the features of one of any one of the Claims 1 to 8.

10. A bag filling system (100) according to Claim 9, **characterized in that** the cooling device (10), in particular the cooling channel (20) is oriented along or substantially along the transport direction (T) of the film material (200).

## Revendications

1. Dispositif de refroidissement (10) pour le refroidissement d'un cordon de soudure (220) au niveau d'un soufflet latéral (210) d'un matériau sous forme de film (200) dans une installation de remplissage de sacs (100), comprenant un canal de refroidissement (20) pour l'introduction d'un fluide de refroidissement (F), le canal de refroidissement (20) comprenant une portion de refroidissement (22) avec deux surfaces de sortie (24) formant entre elles un angle aigu, dans lesquelles sont réalisées des ouvertures de sortie (26) pour la sortie du fluide de refroidissement (F) hors du canal de refroidissement (20), **caractérisé en ce que** la portion de refroidissement (22) comprend au moins un élément de guidage (30) pour le guidage du fluide de refroidissement (F), l'au moins un élément de guidage (30) orientant la direction d'écoulement (S) du fluide de refroidissement (F) sortant des ouvertures de sortie (26) avec un angle aigu par rapport à la surface de sortie (24) correspondante.

2. Dispositif de refroidissement (10) selon la revendication 1, **caractérisé en ce que** l'angle de sortie entre la direction d'écoulement (S) du fluide de refroidissement (F) sortant des ouvertures de sortie (26) et les surfaces de sortie (24) est inférieur ou égal à environ 45°.

3. Dispositif de refroidissement (10) selon l'une des revendications précédentes, **caractérisé en ce que** la direction d'écoulement (S) du fluide de refroidissement (F) sortant des ouvertures de sortie (26) est orientée le long des surfaces de sortie (24), plus particulièrement parallèlement ou globalement parallèlement aux surfaces de sortie (24).

4. Dispositif de refroidissement (10) selon l'une des revendications précédentes, **caractérisé en ce que** les ouvertures de sortie (26) sont disposées dans la zone du sommet (28) des surfaces de sortie (24), plus particulièrement exactement au sommet (28a) des surfaces de sortie (24).

5. Dispositif de refroidissement (10) selon l'une des revendications précédentes, **caractérisé en ce que** l'au moins un élément de guidage (30) est fixé de manière interchangeable au canal de refroidissement (20).

6. Dispositif de refroidissement (10) selon l'une des revendications précédentes, **caractérisé en ce que** les ouvertures de sortie (26) présentent une section d'ouverture libre qui génère une accélération de l'écoulement du fluide de refroidissement (F).

7. Dispositif de refroidissement (10) selon l'une des revendications précédentes, **caractérisé en ce que** la longueur de l'au moins un élément de guidage (30) dans la direction de transport (T) du matériau en forme de film (200) est inférieure ou égale à la longueur du cordon de soudure (220) dans la direction de transport (T) du matériau en forme de film (200).

8. Dispositif de refroidissement (10) selon l'une des revendications précédentes, **caractérisé en ce que** la direction d'écoulement (S) du fluide de refroidissement (F) sortant des ouvertures de sortie (24) est orientée transversalement ou globalement transversalement par rapport à la direction d transport (T) du matériau en forme de film (200).

9. Installation de remplissage de sacs (100) pour le remplissage de sacs avec un produit en vrac, comprenant une station de scellement (110) pour la réalisation d'au moins un cordon de soudure (220) dans un soufflet latéral (210) d'un matériau en forme de film (200), plus particulièrement sous la forme d'une bande de film, comprenant en outre un dispositif de refroidissement (10) pour le refroidissement du cordon de soudure (220) réalisé, **caractérisée en ce que** le dispositif de refroidissement (10) comprend les caractéristiques d'une des revendications 1 à 8.

10. Installation de remplissage de sacs (100) selon la revendication 8, **caractérisée en ce que** le dispositif de refroidissement (10), plus particulièrement le canal de refroidissement (20) est orienté le long ou globalement le long de la direction de transport (T) du matériau en forme de film (200).
